# EUROPEAN PATENT SPECIFICATION

(11) **EP 3 546 079 B1**
(45) Date of publication and mention of the grant of the patent: **26.04.2023**
(21) Application number: 18164867.6
(22) Date of filing: 29.03.2018
(51) Int. Cl.: B08B 9/42, B65G 17/36

(54) **AN END PORTION FOR A POCKET FOR RECEIVING EMPTY ARTICLES TO BE WASHED AND ADVANCED ALONG A WASHING TREATMENT PATH**
ENDTEIL FÜR EINE TASCHE ZUR AUFNAHME VON LEEREN ARTIKELN, DIE ENTLANG EINES WASCHBEHANDLUNGSWEGS GEWASCHEN UND VORGESCHOBEN WERDEN
PARTIE D'EXTRÉMITÉ POUR UNE POCHE DE RÉCEPTION D'ARTICLES VIDES DEVANT ÊTRE LAVÉS ET AVANCÉS LE LONG D'UN TRAJET DE TRAITEMENT DE LAVAGE

(43) Date of publication of application: 02.10.2019
(73) Proprietor: Sidel S.p.A., 43126 Parma (IT)
(72) Inventor: BERZAGHI, Claudio, 37139 VERONA (IT)
(74) Representative: Sidel Group

(56) References cited:
- EP-A1- 2 727 660
- DE-A1- 2 007 811
- DE-U1- 9 301 643

## Description

The present invention relates to an end portion for a pocket for receiving empty articles to be washed and advanced along a washing treatment path.

Washing machines are known with the purpose of cleaning the empty articles upstream of a filling and a labelling station, in which the articles are respectively filled with the pourable product and labelled with respective labels.

The document DE-U-9301643 discloses an end portion in accordance with the preamble of claim 1.

An example of washing unit is known, e.g. from EP2727660 in the name of the same of Applicant.

The known washing unit comprises:
- a feeding system;
- a washing tunnel;
- a looped chain conveyor for advancing the articles along a closed path and which extends inside the washing tunnel from an inlet station to an outlet station; and
- a plurality of successive treatment zones through which the chain conveyor advances the articles.

In detail, the feeding system comprises an endless conveyor and a sequencing device interposed between the endless conveyor and the inlet station of the chain conveyor.

The endless conveyor comprises a plurality of channels along which respective rows of articles are advanced towards the inlet station of the chain conveyor.

The sequencing device withdraws, one after the other, the empty articles from respective rows of the endless conveyors and convey them to the chain conveyor with a given rate to the inlet station.

The chain conveyor comprises a plurality of bars which are fed with respective rows of articles to be washed at the inlet station of the washing tunnel by the feeding system and outlets washed articles at the outlet station.

In particular, each bar comprises a plurality of aligned pockets, which receive, convey and outlet relative washed articles.

Each pocket comprises, in turn,:
- a tubular main portion, which houses a cylindrical body of the articles; and
- an end portion, which defines a seat for a neck portion of the articles and protrudes from an axial end of the tubular main portion.

The treatment zones are arranged between the inlet station and the outlet station.

In detail, the treatment zones comprise: a prewash zone, a first cleaning zone, a second cleaning zone and a final rinsing zone.

The prewash zone, the first cleaning zone, the second cleaning zone comprise respective baths filled with a chemical agent and through which the articles are advanced.

The treatment zone also comprises a plurality of nozzles for ejecting a washing agent inside the inner volume of the articles, as they are upside-down advanced.

In order to ensure a proper washing of the articles, it is necessary that the neck portion of the articles are precisely centred inside the end portions of relative pockets.

In this respect, it should be considered that some articles are fed to the pockets with relative straws still arranged therein and outwardly protruding from the neck of the articles.

These straws are washed out of the articles during the washing treatment and remain inside the end portion.

However, there is the risk that the straws remain stuck inside the end portion in a position, in which they prevent the neck of the subsequent article form being precisely positioned inside the end portion and, therefore, the correct washing of the subsequent article.

In particular, there is the risk that the straws might remain stuck in a position substantially orthogonal to the elongation axis of the end portion and, therefore, to the insertion direction of the article inside the same end portion.

A need is therefore felt within the industry for an end portion for a pocket for receiving an empty article, which allows to eliminate the aforesaid drawback in a straightforward, low-cost manner.

It is an object of the present invention to provide an end portion for a pocket for receiving an empty article, which meets the above requirements.

The aforementioned object is achieved by the present invention as it relates to an end portion for a pocket for receiving an empty article, as claimed in claim 1.

One preferred embodiment is hereinafter disclosed for a better understanding of the present invention, by way of non-limitative example and with reference to the accompanying drawings, in which:
- Figure 1 is a lateral view of a washing unit for treating empty articles comprising a plurality of bars fitted with pockets having respective end portions, in accordance with the invention;
- Figure 2 is a lateral view in an enlarged scale of some components of an inlet portion of the washing unit of Figure 1, with parts removed for clarity;
- Figure 3 is lateral view in an enlarged scale of some components of the treatment zone of the washing unit of Figure 1, with parts removed for clarity;
- Figure 4 is a lateral view in a further enlarged view of a plurality of pockets housing some articles with relative straws therein while being conveyed by the washing unit of Figures 1 to 3;
- Figure 5 is a top view of a bottom portion of the pockets of Figure 4;
- Figure 6 is a section in a further enlarged view of one of the pocket of Figure 3 taken along line II-II;
- Figure 7 is a section of one of the pocket of Figure 6 taken along line VII-VII;
- Figure 8 is a perspective view taken from a first visual angle of an end portion of the pocket of Figure 6 and 7; and
- Figure 9 is a perspective view taken from a second visual angle of the end portion of Figure 8.

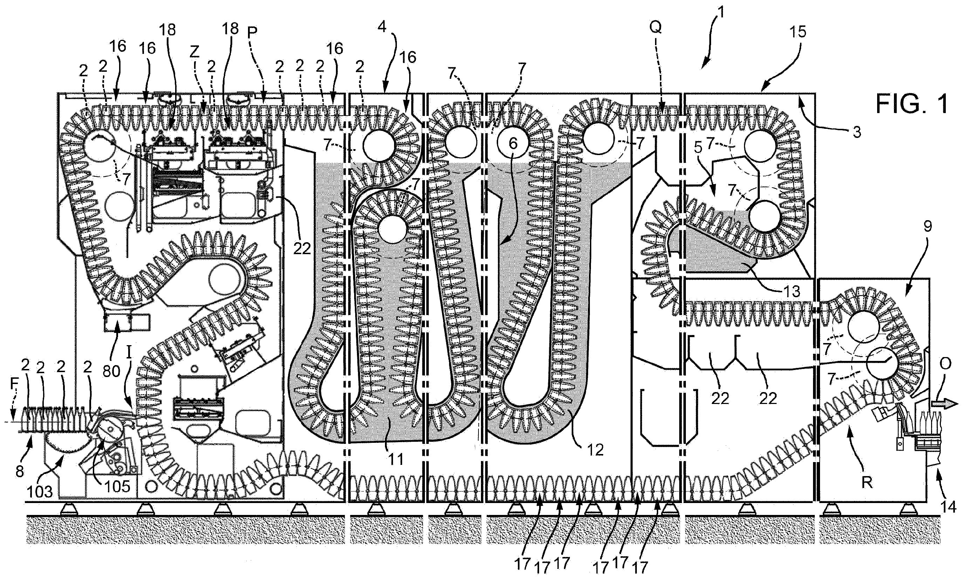

With reference to figure 1, numeral 1 indicates a washing unit for washing articles 2, in particular empty articles intended to be filled with a pourable product.

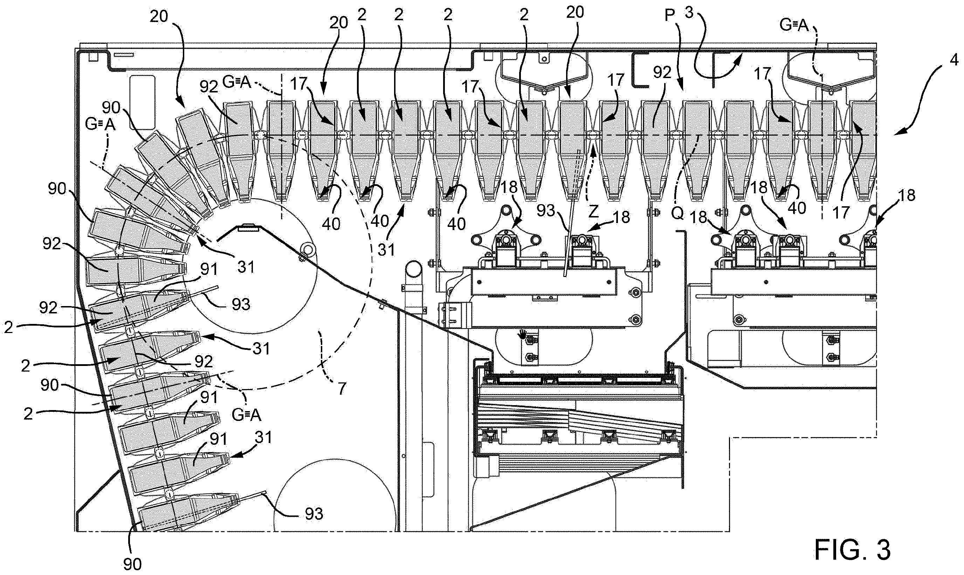

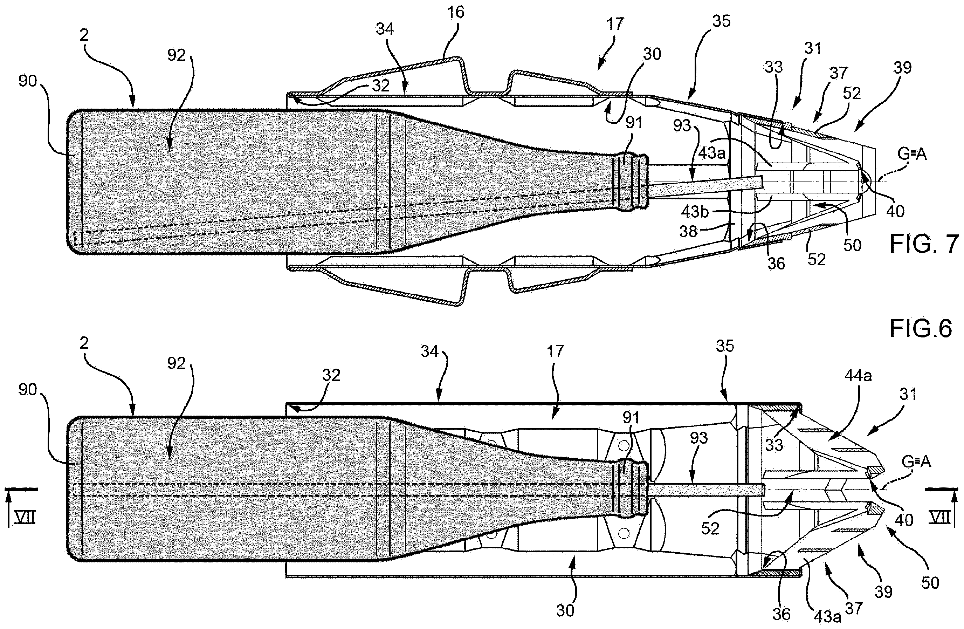

In detail, each article 2 extends along an axis A and comprises (Figures 3 to 7):
- a bottom portion 90;
- a neck portion 91; and
- a body 92.

In the embodiment shown, articles 2 are re-cycled and made of glass. Articles 2 can also comprises relative straws 93 housed inside relative bodies 92 and protruding therefrom.

Axis A is vertical, in the embodiment shown.

Washing unit 1 substantially comprises (Figure 1):
- a washing tunnel 3, which is fed with empty articles 2 to be washed and in which articles 2 are washed;
- a chain conveyor 4 for advancing articles 2 inside washing tunnel 3 along a closed loop path P; and
- a plurality of treatment zones 5, which are arranged inside washing tunnel 3 and comprise, in the embodiment shown, respective tanks 6 filled with respective cleaning agent and through which chain conveyor 4 advances articles 2.

Washing unit 1 also comprises:
- a feeding system 8, which feeds a sequence of rows 20 of articles 2 to be cleaned to chain conveyor 4 along a direction F and at an inlet station I of washing tunnel 3; and
- an outfeed conveyor 14, which receives a sequence of rows of cleaned articles 2 from chain conveyor 4 at an outlet station O of washing tunnel 3.

Direction F is, in the embodiment shown, horizontal and orthogonal to axes A of articles 2.

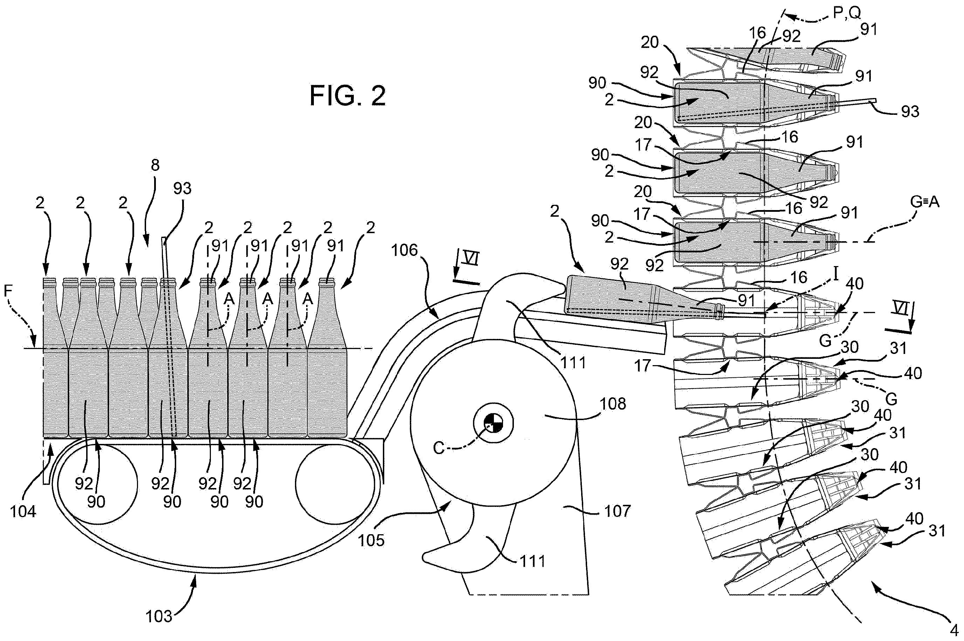

Feeding system 8 comprises, with special reference to Figure 2:
- a plurality of endless conveyors 103 (only one of which is schematically shown) comprising respective channels 104 aligned along path P;
- a motor (not shown in the Figures), which drives conveyors 103; and
- a sequencing device 105, which receives a plurality of rows 20 of articles 2 from relative conveyors 103 and feeds, one after the other, articles 2 of rows 20 to inlet station I of washing tunnel 3.

In detail, rows 20 are aligned parallel to direction F.

Sequencing device 105 comprises a frame.

In particular, sequencing device 105 comprises, for each channel 104,:
- a conveying surface 106, which extends from conveyor 103 to station I of washing tunnel 3 along an arch-shaped shape;
- a lever 107 which is hinged to the frame about an hinge axis; and
- a lever 108 which is hinged to lever 107 about an axis C parallel to hinge axis of lever 107 and comprises two end fingers 111 adapted to contact bottom portions of articles 2 and to thrust articles 2 along surface 106.

Axis C and hinge axis of lever 107 are, in the embodiment shown, parallel to one another.

Axis C and hinge axis of lever 107 are, in the embodiment shown, orthogonal to axis A and direction P.

Sequencing device 105 also comprises a pair of actuators for causing the rotation of lever 107 with respect to frame 103 about hinge axis thereof and the rotation of lever 108 with respect to lever 107 about axis C.

Thanks to the presence of levers 107, 108 hinged to another, each sequencing device 105 can transfer, one after the other, the sequence of article 2 of respective row 20 towards inlet station I of washing tunnel 3 with the right position, horizontal in the embodiment shown.

In the embodiment shown, each sequence is formed by only forwardmost article 2, with reference to the advancing direction of articles 2 parallel to direction F.

In particular, sequencing device 105 can transfer article 2 of respective channel 104 along a not circular arch.

Path P comprises a work branch Q and a return branch R.

Work branch Q extends from inlet station I to outlet station O while return branch R extends from outlet station O to return station I.

In the embodiment shown, path P lies on a vertical plane, and conveying surface 106 and conveyor 14 advance articles 2 along a horizontal direction.

In particular, treatment zones 5 comprise a prewash zone, a first cleaning zone, a second cleaning zone.

The prewash zone, the first cleaning zone, the second cleaning zone comprise respective baths 11, 12, 13 filled with a cleaning agent.

For a better understanding, in Figure 1, the volume occupied by the cleaning solution has been highlighted by colouring the relative cross section in grey.

Due to the temperature of the cleaning agent, articles 2 are heated up as they travel inside bath 11, 12, 13

Furthermore, label possibly arranged on articles 2 are removed as articles 2 travel inside bath 11, 12, 13.

Treatment zones 5 also comprises a rinsing zone 9, which is aimed to remove the chemical agents out of articles 2 and to cool them down. Rinsing zone 9 comprises a plurality of sprinkling device acting one after the other on articles 2.

Finally, treatment zones 5 comprise a spraying group 18, which is adapted to eject a washing fluid inside articles 2, while the latter are advanced along work branch Q.

In particular, spraying group 18 is arranged in a zone Z of work branch Q, along which articles 2 are advanced upside-down.

Zone Z is arranged downstream of inlet station I and upstream of baths 11, 12, 13, proceeding according to advancing direction of articles 2 along path P.

Spraying group 18 is movable parallel to work branch Q and at the same speed of articles 2.

Nozzles 18 are arranged below articles 2.

Chain conveyor 4 advances articles 2 along work branch Q and returns without articles 2 along return branch R.

Bath 11, 12, 13 and rinsing zone 9 are arranged, in this succession, along work branch Q of path P.

As evident from Figure 1, as they are advanced along zone Z of work branch Q by chain conveyor 4, articles 2 can be arranged upside-down.

Furthermore, chain conveyor 4 comprises, along work branch Q,:
- a plurality of driven and driving wheels 7, which mesh with conveyor chain 4 and causes the movement thereof along path P; and
- a plurality of stationary supporting structures 22, which interacts with conveyor chain 4 to prevent the bending thereof.

As shown in Figure 1, chain conveyor 4 comprises:
- a pair of chains 15 (only one of which is shown in Figure 1) elongated parallel to path P and parallel to one another; and
- a plurality of subsequent conveying beams 16, which extend between chains 15 and orthogonally to chains 15 and path P.

Chain conveyor 4 further comprises a stationary guide 80 for supporting chains 15.

Guide 80 is shaped in the same way as path P.

Each beam 16 comprises a plurality of pockets 17 for holding relative articles 2.

Each beam 16 is adapted to receive forwardmost articles 2 of respective rows 20 from sequencing device 105.

In particular, forwardmost articles 2 of each row 20 are transferred by sequencing device 105 to respective pockets 17 of beam 16 travelling at inlet station I.

Pockets 17 of each beam 16 are aligned orthogonally to path P. Accordingly, also articles 2, when conveyed along work branch Q and housed inside relative pockets 17, are aligned onto relative beams 16 orthogonally to path P to form respective rows 20.

In the following of the present description, reference will be made to only one pocket 17 and relative article 2, being all the pockets 17 identical to one another.

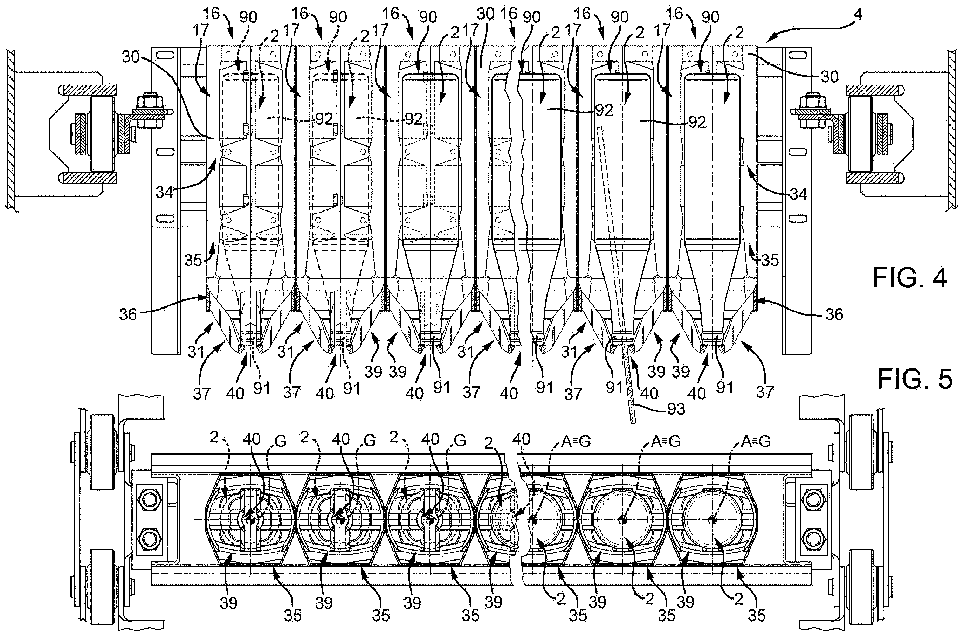

With reference to Figures 4 to 9, pocket 17 comprises:
- a main tubular body 30 which houses body 92 of article 2 and has a main extension along an axis G; and
- an end portion 31, also known in the art as "alveoulus", which defines a seat 40 for neck portion 91 of article 2 and has a main extension along axis G.

Body 30 comprises a pair of opposite axial ends 32, 33.

Furthermore, body 30 comprises, proceeding from end 32 to end 33 parallel to axis G,:
- a cylindrical portion 34; and
- a portion 35, which converges from portion 34 to end 33 and comprise two relieved tapering portions opposite to one another.

End portion 31 comprises, in turn,:
- an open axial end 36; and
- a frame 37, which defines seat 40 on the opposite axial side of end 36.

Axis G is coincident with axis A, when article 2 is housed inside pocket 17.

Body 30 and end portion 31 are releasably connected with one another.

Article 2 is inserted inside pocket 17, by entering neck portion 91 parallel to axis G from end 32 to end 33, up to when neck portion 91 is housed inside seat 40.

The proper and precise engagement of neck portion 91 inside seat 40 is necessary to ensure a proper of washing of article 2.

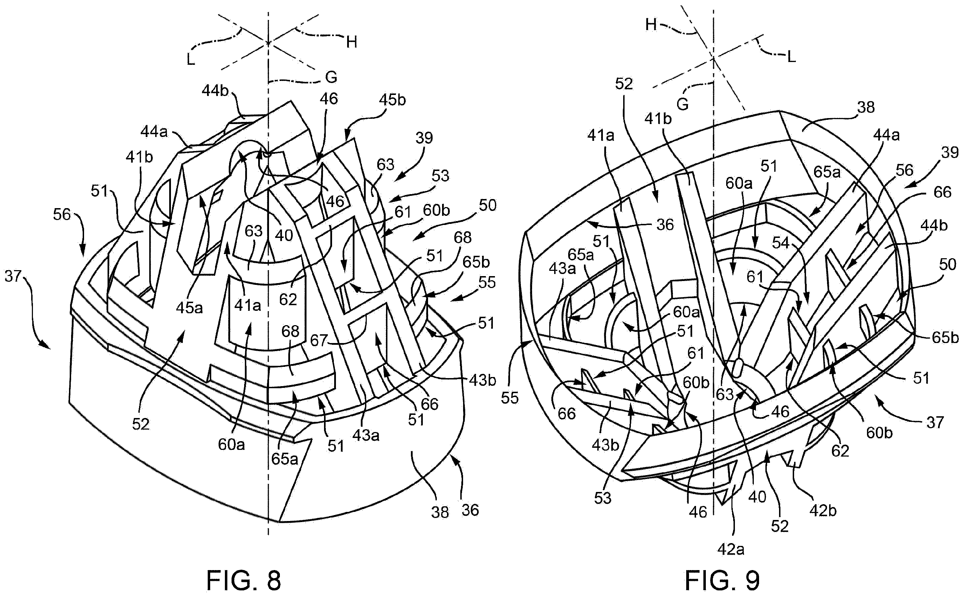

With reference to Figures 8 and 9, frame 37 comprises:
- an annular fixing portion 38 fitted to body 30; and
- a bridge 39 protruding from portion 38, converging towards axis G and defining seat 40.

In detail, bridge 39 comprises, in turn,:
- two pairs of ribs 41a, 41b; 42a, 42b opposite to one another and converging from fixing portion 38 towards axis G and on the opposite side of fixing portion 38;
- two pairs of ribs 43a, 43b; 44a, 44b opposite to another and converging from fixing portion 38 towards axis G and on the opposite side of fixing portion 38; and
- a pair of wall 45a, 45b parallel to one another and defining seat 40.

In particular, ribs 41a, 41b and 42a, 42b are opposite to one another along an axis H orthogonal to axis G and ribs 43a, 43b; 44a, 44b are opposite to another along an axis L orthogonal to axes G, H.

Wall 45a joins ribs 41b, 44a, 44b, 45a and wall 45b joins ribs 41a, 43a, 43b, 45b.

Walls 45 predominantly extends along respective planes orthogonal to axis G and comprise respective relieves 46 forming seat 40. Relieves 46 are shaped as respective arc of circumferences and have a shape corresponding to the shape of neck portion 91.

In accordance with the invention, frame 37 comprises (Figures 8, 9) a blocking element 50, which surrounds seat 40 and retains straw 93 inside end portion 31.

Still more precisely, blocking element 50 retains straw 93 in a position, in which it does not interfere with the insertion of neck portion 91 of following article 2 inside seat 40.

Preferably, blocking element 50 comprises:
- a pair of walls 52, which extend between ribs 41a, 41b and 42a, 42b respectively and are opposite to one another along axis H.
- a pair of crossbars 53, 54, which extends between ribs 41a, 42a and ribs 41b, 42b respectively, cross ribs 43a, 43b, and are joined to walls 52;
- a pair of crossbars 55, 56, which extends between ribs 41a, 42a and ribs 41b, 42b respectively, cross ribs 44a, 44b, and are joined to walls 52.

In the embodiment shown, crossbars 53, 54 are interposed between seat 40 and crossbars 55, 56.

In other words, crossbars 53, 54 are closer to seat 40 than crossbars 55, 56. Crossbar 55, 56 are closer to portion 38 than crossbar 53, 54.

Blocking element 50 and ribs 41a, 41b, 42a, 42b, 43a, 43b, 44a, 44b define a plurality of through passages 51 for the washing fluid. Passages 51 are in fluid connection with the inner volume of article 2.

In particular, each crossbar 53 (54) comprises:
- a pair of lateral portions 60a, 60b extending between ribs 41a, 43a (41b, 44a) and 43b, 42a (44b, 42b) respectively; and
- a main portion 61 extending between ribs 43a, 43b (44a, 44b).

In the embodiment shown, the thickness of main portion 61 is higher than the thickness of lateral portions 60a, 60b.

Main portion 61 comprises an end edge 62 on the side of seat 40 and lateral portions 60a, 60b comprise respective end edges 63 on the side of seat 40.

Edges 62 are closer to seat 40 than end respective edges 63.

The thickness of main portion 61 measured parallel to axis G is greater than the thickness of lateral portions 60a, 60b measured parallel to the same axis G.

Lateral portions 60a, 60b are curved.

Furthermore, each crossbar 55 (56) comprises:
- a pair of lateral portions 65a, 65b extending between ribs 41a, 43a (41b, 44a) and 43b, 42a (44b, 42b) respectively; and
- a main portion 66 extending between ribs 43a, 43b (42a, 42b).

In the embodiment shown, the thickness of main portion 66 is higher than the thickness of lateral portions 65a, 65b.

Main portion 66 comprise an end edge 67 on the side of seat 40 and lateral portions 65a, 65b comprise respective end edges 68 on the side of seat 40.

Edges 67 are closer to seat 40 than end edges 68.

The thickness of main portion 66 measured parallel to axis G is greater than the thickness of lateral portions 65a, 65b measured parallel to the same axis G.

Main portions 61; 66 and respective lateral portions 60a, 60b; 65a, 65b are spaced from one another, so as to form passages 51.

In particular, passages 51 are formed between:
- supporting portion 38 and crossbars 55, 56, and ribs 41a, 43a; 43a, 43b; 43b, 42a; 42a, 42b; 42b, 44b; 44b, 44a;
- crossbars 55, 56 and respective crossbars 53, 54 and ribs 41a, 43a; 43a, 43b; 43b, 42a; 42a, 42b; 42b, 44b; 44b, 44a; and
- crossbars 53, 54 and walls 45, and ribs 41a, 43a; 43a, 43b; 43b, 42a; 42a, 42b; 42b, 44b; 44b, 44a.

The operation of washing unit 1 is described in detail in the following.

Feeding system 8 advances a plurality of rows 20 of articles 2 to be washed inside channel 104 defined by conveyor 103 and parallel to direction F.

Especially when they are re-cycled, articles 2 might house relative straws 93 protruding from the respective neck portions 91.

Articles 2 properly positioned are arranged with respective axes A orthogonal to path P and with respective bottoms 90 lying on conveyor 103.

Beams 16 of chain conveyor 4 withdraw respective rows 20 of articles 2 at inlet station I from sequencing device 105, advance articles 2 inside washing tunnel 3 along work branch Q, discharge rows 20 of cleaned articles 2 at outlet station O onto outfeed conveyor 14, and return along return branch R without articles 2.

In greater detail, articles 2 of each row 20 are inserted inside respective pockets 17 of relative beam 16, along a curved portion of path P interposed between inlet station I and zone Z.

Still more precisely, body 92 of each article 2 is inserted inside body 30 of relative pocket 17 and neck portion 93 of each article 2 is fitted inside end portion 31 of relative pocket 17 with relative axis G coincident with axis A.

As consequence of the advancing movement of articles 2 in the curved portion of path P, straws 93 might fall outside article 2 and remains inside end portion 31.

Bridge 39 of each pocket 17 eases the correct positioning of neck portion 31 inside relative seat 40

Blocking element 50 of each pocket 17 prevents straw 93 from remaining stuck inside end portion 31 in a position, in which it would interfere with the correct positioning of the neck portion 93 of the following article 2 inside pocket 17 and it would penalize the efficiency of the washing action on the following article 2.

In particular, blocking element 50 of each pocket 17 prevents straw 93 from remaining stuck in a position orthogonal to axes A, G of relative article 2 and end portion 30.

Furthermore, as articles 2 are advanced along work branch Q, they move through zone Z in a upside-down configuration (Figure 1).

Spraying group 18 ejects a washing fluid through neck portion 91 and inside the inner volume of articles 2.

The washing fluid carries out a cleaning of the inner volume of articles 2.

The correct washing action of the washing fluid is ensured by the fact that neck portion 93 of each article 2 is fitted inside end portion 31 of relative pocket 17.

As the travel through baths 11, 12, 13, the washing solution moves through passages 51 and removes the label from articles 2.

Straws 93 are eventually removed from end portions 17 either thanks to the action of the solution for removing labels or causing straws 93 to fall on a conveyor.

At the end of return branch R, chain conveyor 4 advance pockets 17 without any straws 93 inside relative end portions 31. As a result, articles 2 still to be washed can be inserted inside relative pockets 17 of relative beam 16 at inlet station I, with neck portion 93 centered inside corresponding seats 40. This ensures that these articles 2 can undergo a proper and correct washing operation along path P.

From an analysis of the features of end portion 31 according to the present invention, the advantages it allows to obtain are apparent.

In particular, each blocking element 50 prevents straw 93 of relative article 2 from remaining stuck inside end portion 31 in position, in which it would interfere with the proper positioning of neck portion 91 of following article 2 inside seat 40.

Each blocking element 50 prevents straw 93 of relative article 2 from remaining stuck in a position orthogonal to axes A, G, which would prevent the following article 2 from being properly and completely inserted inside end portion 17.

Each blocking element 50 allows straw 93 of relative article 2 to being set only in positions, which do not affect the proper and complete insertion of neck portion 91 inside relative seat 40 and from which relative straw 93 can be moved as a result of the normal movement of relative beam 16.

In particular, each blocking element 50 substantially reduces the risk that straws 93 might remain stuck in a position substantially orthogonal to axis A, G and, therefore, to the insertion direction of the article 2 inside end portion 31.

It is therefore ensured that the following article 2 housed in pocket 17 can undergo a proper washing process. It is also ensured that no straws 93 remain in washed articles 2 at outlet station O.

Furthermore, the labels can be removed from articles 2 without any interference with straws 93.

Finally, end portions 31 can be easily retrofitted to bodies 30 of existing pockets 17.

Clearly, changes may be made to end portion 31 as described and illustrated herein insofar as these do not depart from the scope of protection as defined in the accompanying claims.

## Claims

1. An end portion (31) for a pocket (17) for receiving an empty article (2) to be washed and advanced along a washing treatment path (P), comprising:
- a frame (37), defining a seat (40) configured to receive a neck portion (91) of an empty article (2);
said frame (37) comprising at least one blocking element (50), surrounding at least part of said seat (40) for retaining and positioning any straw (93) present in said article (2) and avoiding interference with the insertion of the neck portion (91) of a subsequent article (2) inside said seat (40),
said frame (37) comprising:
- an annular portion (38) extending around a first axis (G); and
- a bridge (39) protruding from an axial end of said annular portion (38) and defining said seat (40),
said bridge (39) comprising:
- at least two first and two second ribs (41a, 41b; 42a, 42b) facing with one another along a second axis (H) transversal to said first axis (G); and
- at least two third and two fourth ribs (43a, 43b; 44a, 44b) facing with one another along a third axis (L) transversal to said first and second axis (G, H);
said blocking element (50) comprising:
- at least one first crossbar (53; 55) extending between one (41a) of said first rib (41a, 41b) and one (42a) of said second rib (42a, 42b) transversally to said first and second rib (41a, 41b; 42a, 42b); or
- at least one second crossbar (54; 56) extending between the other one (41b) of said first rib (41a, 41b) and other one (42b) of said second rib (42a, 42b) transversally to said first and second rib (41a, 41b; 42a, 42b), **characterized by** comprising two said first crossbars (53; 55) or said second crossbars (54, 56) spaced from one another parallel to said first axis (G) or
two said first crossbars (53; 55) and two said second crossbars (54; 56) spaced from one another parallel to said first axis (G).

2. The end portion of claim1, **characterized in that** at least one of said first crossbar (53, 55) and/or said second crossbar (54, 56) comprises:
- at least one first portion (60a, 60b; 65a, 65b) extending between one (41a) of said first ribs (41a, 41b) and one (43a) of said third ribs (43a, 43b); or
- at least one second portion (60b, 60a; 65b, 65a) extending between the other one (43b) of said third ribs (43a, 43b) and a respective one (42a) of said second ribs (42a, 42b)
- a third portion (61; 66) interposed between said first and second portion (60a, 60b, 65a, 65b; 60b, 60a, 65b, 65a) and extending between respective third ribs (43a, 43b; 44a, 44b), wherein
said third portion (61; 66) has a first thickness greater than the second thickness of said first and second portion (60a, 65a; 60b, 65b) measured parallel to said first axis (G); or
wherein said first, second and third portions (60a, 65a; 60b, 65b; 61, 66) are bound on the side of said seat (40) by respective first, second and third end edge (63, 63, 62; 68, 68, 67); said third end edge (62; 67) being closer to said seat (40) than said first and second edge (63, 63; 68, 68).

3. The end portion of claim 1, , **characterized in that** said blocking element (50) further comprises at least one fourth portion (52) extending between said first ribs (41a, 41b); and/or at least one fifth portion (52) extending between said second ribs (42a, 42b).

4. The end portion according to claim 3, **characterized in that** said fourth portion (52) is connected to both said first portions (60a, 60b; 65a, 65b).

5. The end portion according to one or more of the preceding claims comprising:
- a first wall (45a), which extends between one (41b) of said first ribs (41a, 41b) and one (42a) of said second ribs (42a, 42b) and is joined to said fourth ribs (44a, 44b); or
- a second wall (45b), which extends between the other one (41a) of said first ribs (41a, 41b) and the other one (42b) of said second ribs (42a, 42b) and is joined to said third ribs (43a, 43b);
said first and second wall (45a, 45b) defining said at least part of said seat (40).

## Patentansprüche

1. Endabschnitt (31) für eine Tasche (17) zur Aufnahme eines zu spülenden und entlang einer Spülbehandlungsbahn (P) vorzuschiebenden leeren Artikels (2), umfassend:
- einen Rahmen (37), der einen Sitz (40) definiert, der zur Aufnahme eines Halsabschnitts (91) eines leeren Artikels (2) ausgestaltet ist,
wobei der Rahmen (37) mindestens ein Blockierelement (50) umfasst, das mindestens einen Teil des Sitzes (40) umgibt, um einen etwaigen in dem Artikel (2) vorhandenen Strohhalm (93) zurückzuhalten und zu positionieren und eine Behinderung des Einführens des Halsabschnitts (91) eines nachfolgenden Artikels (2) in den Sitz (40) zu vermeiden,
wobei der Rahmen (37) Folgendes umfasst:
- einen ringförmigen Abschnitt (38), der sich um eine erste Achse (G) erstreckt, und
- eine Brücke (39), die von einem axialen Ende des ringförmigen Abschnitts (38) vorragt und den Sitz (40) definiert,
wobei die Brücke (39) Folgendes umfasst:
- mindestens zwei erste und zwei zweite Rippen (41a, 41b; 42a, 42b), die einander entlang einer quer zu der ersten Achse (G) verlaufenden zweiten Achse (H) zugewandt sind, und
- mindestens zwei dritte und zwei vierte Rippen (43a, 43b; 44a, 44b), die einander entlang einer quer zu der ersten und der zweiten Achse (G, H) verlaufenden dritten Achse (L) zugewandt sind,
wobei das Blockierelement (50) Folgendes umfasst:
- mindestens einen ersten Querträger (53; 55), der sich zwischen einer (41a) der ersten Rippen (41a, 41b) und einer (42a) der zweiten Rippen (42a, 42b) quer zu den ersten und den zweiten Rippen (41a, 41b; 42a, 42b) erstreckt, oder
- mindestens einen zweiten Querträger (54; 56), der sich zwischen der anderen (41b) der ersten Rippen (41a, 41b) und der anderen (42b) der zweiten Rippen (42a, 42b) quer zu den ersten und den zweiten Rippen (41a, 41b; 42a, 42b) erstreckt, **dadurch gekennzeichnet, dass** er zwei erste Querträger (53; 55) oder zweite Querträger (54, 56) umfasst, die parallel zu der ersten Achse (G) voneinander beabstandet sind, oder
zwei erste Querträger (53; 55) und zwei zweite Querträger (54, 56), die parallel zu der ersten Achse (G) voneinander beabstandet sind.

2. Endabschnitt nach Anspruch 1, **dadurch gekennzeichnet, dass** mindestens einer der ersten Querträger (53, 55) und/oder der zweiten Querträger (54, 56) Folgendes umfassen:
- mindestens einen ersten Abschnitt (60a, 60b; 65a, 65b), der sich zwischen einer (41a) der ersten Rippen (41a, 41b) und einer (43a) der dritten Rippen (43a, 43b) erstreckt, oder
- mindestens einen zweiten Abschnitt (60a, 60b; 65a, 65b), der sich zwischen einer (43b) der dritten Rippen (43a, 43b) und einer jeweiligen (42a) der zweiten Rippen (42a, 42b) erstreckt,
- einen dritten Abschnitt (61; 66), der zwischen dem ersten und dem zweiten Abschnitt (60a, 60b; 65a, 65b; 60b, 60a, 65b, 65a) liegt und sich zwischen jeweiligen dritten Rippen (43a, 43b; 44a, 44b) erstreckt, wobei
der dritte Abschnitt (61; 66) eine erste Dicke hat, die parallel zu der ersten Achse (G) gemesssen, größer als die zweite Dicke des ersten und des zweiten Abschnitts (60a, 65a; 60b, 65b) ist, oder
wobei der erste, der zweite und der dritte Abschnitt (60, 65a; 60b, 65b; 61, 66) an der Seite des Sitzes (40) durch einen jeweiligen ersten, zweiten und dritten Endrand (63, 63, 62; 68, 68 67) eingegrenzt sind, wobei der dritte Endrand (62; 67) dem Sitz (40) näher ist als der erste und der zweite Endrand (63, 63; 68, 68).

3. Endabschnitt nach Anspruch 1, **dadurch gekennzeichnet, dass** das Blockierelement (50) ferner mindestens einen vierten Abschnitt (52) umfasst, der sich zwischen den ersten Rippen (41a, 41b) erstreckt, und/oder mindestens einen fünften Abschnitt (52), der sich zwischen den zweiten Rippen (42a, 42b) erstreckt.

4. Endabschnitt nach Anspruch 3, **dadurch gekennzeichnet, dass** der vierte Abschnitt (52) mit beiden ersten Abschnitten (60a, 60b; 65a, 65b) verbunden ist.

5. Endabschnitt nach einem oder mehreren der vorhergehenden Ansprüche, umfassend:
- eine erste Wand (45a), die sich zwischen einer (41b) der ersten Rippen (41a, 41b) und einer (42a) der zweiten Rippen (42a, 42b) erstreckt und mit den vierten Rippen (44a, 44b) verbunden ist, oder
- eine zweite Wand (45b), die sich zwischen der anderen (41a) der ersten Rippen (41a, 41b) und der anderen (42b) der zweiten Rippen (42a, 42b) erstreckt und mit den dritten Rippen (43a, 43b) verbunden ist,
wobei die erste und die zweite Wand (45a, 45b) den mindestens Teil des Sitzes (40) definieren.

## Revendications

1. Partie d'extrémité (31) pour une poche (17) destinée à recevoir un article vide (2) devant être lavé et avancé le long d'un trajet de traitement de lavage (P), comprenant :
un cadre (37), définissant un siège (40) conçu pour recevoir une partie col (91) d'un article vide (2) ;
ledit cadre (37) comprenant au moins un élément de blocage (50), entourant au moins une partie dudit siège (40) pour retenir et positionner toute paille (93) présente dans ledit article (2) et éviter toute interférence avec l'insertion de la partie col (91) d'un article (2) suivant à l'intérieur dudit siège (40),
ledit cadre (37) comprenant :
une partie annulaire (38) s'étendant autour d'un premier axe (G) ; et
un pont (39) faisant saillie d'une extrémité axiale de ladite partie annulaire (38) et définissant ledit siège (40),
ledit pont (39) comprenant :
au moins deux premières et deux deuxièmes nervures (41a, 41b ; 42a, 42b) se faisant face le long d'un deuxième axe (H) transversal audit premier axe (G) ; et
au moins deux troisièmes et deux quatrièmes nervures (43a, 43b ; 44a, 44b) se faisant face le long d'un troisième axe (L) transversal auxdits premier et deuxième axes (G, H) ;
ledit élément de blocage (50) comprenant :
au moins une première barre transversale (53 ; 55) s'étendant entre l'une (41a) desdites premières nervures (41a, 41b) et l'une (42a) desdites deuxièmes nervures (42a, 42b) transversalement auxdites premières et deuxièmes nervures (41a, 41b ; 42a, 42b) ; ou
au moins une seconde barre transversale (54 ; 56) s'étendant entre l'autre (41b) desdites premières nervures (41a, 41b) et l'autre (42b) desdites deuxièmes nervures (42a, 42b) transversalement auxdites premières et deuxièmes nervures (41a, 41b ; 42a, 42b), **caractérisée en ce qu'**elle comprend deux desdites premières barres transversales (53 ; 55) ou desdites secondes barres transversales (54, 56) espacées l'une de l'autre parallèlement audit premier axe (G) ou
deux desdites premières barres transversales (53 ; 55) et deux desdites secondes barres transversales (54 ; 56) espacées les unes des autres parallèlement audit premier axe (G).

2. Partie d'extrémité selon la revendication 1, **caractérisée en ce qu'**au moins l'une parmi ladite première barre transversale (53, 55) et/ou ladite seconde barre transversale (54, 56) comprend :
au moins une première partie (60a, 60b ; 65a, 65b) s'étendant entre l'une (41a) desdites premières nervures (41a, 41b) et l'une (43a) desdites troisièmes nervures (43a, 43b) ; ou
au moins une deuxième partie (60b, 60a ; 65b, 65a) s'étendant entre l'autre (43b) desdites troisièmes nervures (43a, 43b) et l'une respective (42a) desdites deuxièmes nervures (42a, 42b)
une troisième partie (61 ; 66) interposée entre lesdites première et deuxième parties (60a, 60b, 65a, 65b ; 60b, 60a, 65b, 65a) et s'étendant entre des troisièmes nervures (43a, 43b ; 44a, 44b) respectives,
ladite troisième partie (61 ; 66) ayant une première épaisseur supérieure à la seconde épaisseur desdites première et deuxième parties (60a, 65a ; 60b, 65b) mesurée parallèlement audit premier axe (G) ; ou
lesdites première, deuxième et troisième parties (60a, 65a ; 60b, 65b ; 61, 66) étant liées sur le côté dudit siège (40) par des premier, deuxième et troisième bords d'extrémité (63, 63, 62 ; 68, 68, 67) respectifs ; ledit troisième bord d'extrémité (62 ; 67) étant plus près dudit siège (40) que lesdits premier et deuxième bords (63, 63 ; 68, 68).

3. Partie d'extrémité selon la revendication 1, **caractérisée en ce que** ledit élément de blocage (50) comprend en outre au moins une quatrième partie (52) s'étendant entre lesdites premières nervures (41a, 41b) ; et/ou au moins une cinquième partie (52) s'étendant entre lesdites deuxièmes nervures (42a, 42b).

4. Partie d'extrémité selon la revendication 3, **caractérisée en ce que** ladite quatrième partie (52) est reliée auxdites deux premières parties (60a, 60b ; 65a, 65b) .

5. Partie d'extrémité selon une ou plusieurs des revendications précédentes comprenant :
une première paroi (45a), qui s'étend entre l'une (41b) desdites premières nervures (41a, 41b) et l'une (42a) desdites deuxièmes nervures (42a, 42b) et est reliée auxdites quatrièmes nervures (44a, 44b) ; ou
une seconde paroi (45b), qui s'étend entre l'une (41a) desdites premières nervures (41a, 41b) et l'une (42b) desdites deuxièmes nervures (42a, 42b) et est reliée auxdites quatrièmes nervures (43a, 43b) ;
lesdites première et seconde parois (45a, 45b) définissant ladite au moins une partie dudit siège (40).
